# EUROPÄISCHE PATENTSCHRIFT

(11) **EP 3 426 387 B1**
(45) Veröffentlichungstag und Bekanntmachung des Hinweises auf die Patenterteilung: **10.06.2020**
(21) Anmeldenummer: 17710127.6
(22) Anmeldetag: 09.03.2017
(51) Int. Cl.: B01J 19/32, B01D 3/32, F25J 3/04

(54) **VORRICHTUNG UND VERFAHREN ZUM EINBAU EINER PACKUNGSSCHEIBE EINER STRUKTURIERTEN PACKUNG IN EINEN BEHÄLTER EINER STOFFAUSTAUSCHKOLONNE**
APPARATUS AND PROCESS FOR INSTALLING A PACKING PLATE OF A STRUCTURED PACKING IN A CONTAINER OF A MASS TRANSFER COLUMN
APPAREIL ET PROCEDE POUR L' INSTALLATION D'UNE UNITE DE GARNISSAGE STRUCTURE DANS UNE COLONNE D'ECHANGE DE MATIERE

(30) Priorität: 10.03.2016 EP 16000583
(43) Veröffentlichungstag der Anmeldung: 16.01.2019
(73) Patentinhaber: Linde Aktiengesellschaft, 80331 München (DE)
(72) Erfinder: KANZLER, Karlmann, 84504 Altötting (DE)
(74) Vertreter: Meilinger, Claudia Sabine
(86) Internationale Anmeldenummer: PCT/EP2017/025046
(87) Internationale Veröffentlichungsnummer: WO 2017/153057

(56) Entgegenhaltungen:
- DE-A1- 19 520 802
- US-A1- 2014 345 102

## Beschreibung

Die vorliegende Erfindung betrifft eine Vorrichtung zum Einbau einer Packungsscheibe einer strukturierten Packung in einen Behälter einer Stoffaustauschkolonne und ein entsprechendes Verfahren.

Mit Hilfe von Stoffaustauschkolonnen, wie Rektifikations- oder Luftzerlegungssäulen, ist es möglich, verflüssigte Luft in ihre Bestandteile zu zerlegen. Eine derartige Stoffaustauschkolonne weist einen zylinderförmigen Behälter auf, in dem sogenannte Packungen angeordnet sind. Hierbei wird zwischen ungeordneten und geordneten Packungen unterschieden. Ungeordnete Packungen sind Schüttungen aus definiert geformten Körpern, wie Ringen, Zylindern, Sattelkörpern oder dergleichen. Im Gegensatz hierzu werden bei geordneten Packungen Metallgewebe oder -bleche so gefaltet und/oder gewickelt, dass es zu einer intensiven Lenkung des Dampfes und der Flüssigkeit und damit verbundenem intensiven Kontakt beider kommt. Bei geordneten Packungen werden mehrere Packungsscheiben aufeinandergestapelt. Die Packungsscheiben können zur vereinfachten Montage in dem Behälter in blockförmige Packungspakete unterteilt sein. Die Packungspakete sind jeweils wiederum aus einer Vielzahl an aufeinandergestapelten Packungsblechen aufgebaut.

Die DE 43 06 235 B4 beschreibt einen Packungsabschnitt für eine Wärme- und Materialaustauschkolonne mit einer zylindrischen Packung aus vertikal angeordneten, mit kreuzender Riffelung versehenen Metallblechen, wobei die Packung einen Durchmesser größer als 2 m hat und von einer Spannumreifung umgeben ist mit einer axialen Länge größer als die Hälfte der axialen Länge der Packung, wobei die Umreifung die Packung unter einer Spannkraft umschlingt, die größer als 1000 daN ist, um für eine feste und sich selbst stützende Einheitspackungsanordnung zu sorgen.

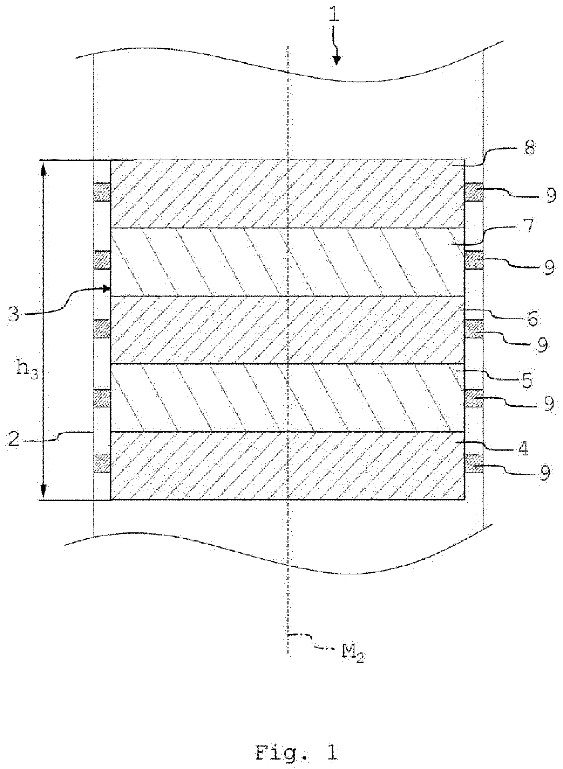

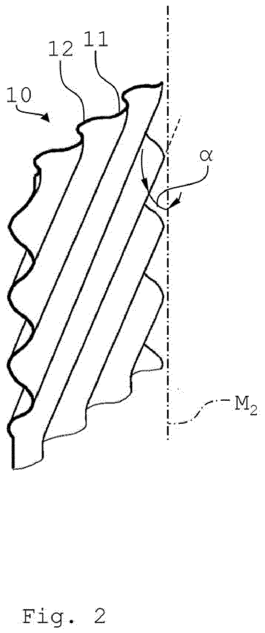

In der DE 195 20 802 C2 wird eine Stoffaustauschkolonne beschrieben, die mehrere Schichten einer geordneten Packung aufweist. Bei größeren Kolonnendurchmessern sind segmentierte Packungsschichten bevorzugt, die wie in Fig. 1 und 2 dargestellt beispielsweise sechs Segmente aufweisen können.

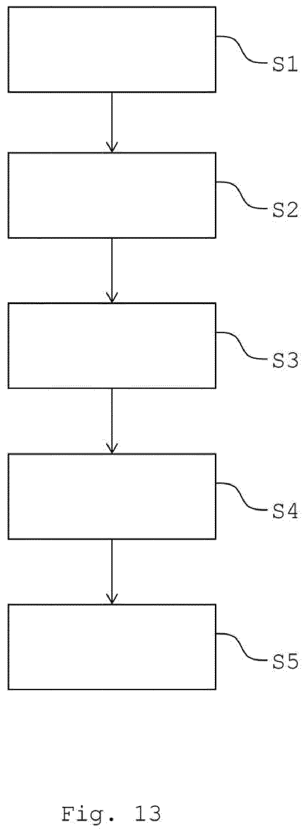

Die US 2014/0345102 A1, welche jeweils den Oberbegriff der Ansprüche 1 und 10 bildet, beschreibt den Einbau einer Packung in eine Destillationskolonne. Wie in Bezug auf Fig. 13 in Absatz [0316] beschrieben, umfasst der Packungsfertigungsbereich einen Coilhalter 92, der kontinuierlich Metallstreifen in eine Presse 94 zur Erzeugung einer gewellten Packung fördert. Von dort aus werden die gewellten Packungen zu einer Wasch- und Schneideinheit 96 gebracht, um diese zu reinigen und in entsprechende Packungsstreifen zu schneiden. Nach dem Schneiden werden die individuellen Packungsstreifen zum Empfangstisch 98 gebracht, wo die Streifen aufgebaut und zusammengefasst werden, um diese dann über den Transfertisch 100 zum Arbeitstisch 102 zu bringen, wo sie zu einer kompletten Packung zusammengesetzt werden. Wie weiter in Absatz [0317] ausgeführt, wird umfänglich um die Packung ein Packungsband 109 gelegt, um eine vollständige Packungseinheit zu bilden. Mithilfe einer Packungshebeeinrichtung 12 wird die Packungseinheit, die eine zylinderförmige Form besitzt, auf die Packungspalette 114 aufgelegt, die mithilfe eines Trailers 116 zum Einbau der Packungseinheit in die Kolonne zu einem anderen Gebäude B2 transportiert wird. Wie aus Fig. 22 bis 23 zu ersehen und in Absatz [0347] beschrieben ist, werden die Packungseinheiten anschließend von oben in die Kolonnenabschnitte 138 eingehoben. Alternativ werden, wie in Absatz [0348] beschrieben, in Boxen angelieferte Packungsteile von oben in die Kolonnenabschnitte 138 eingehoben und manuell von einem Arbeiter eingebaut.

Die Aufgabe der vorliegenden in den Ansprüchen definierten Erfindung besteht darin, ein verbessertes Verfahren und eine verbesserte Vorrichtung zum Einbau einer Packung in einen Behälter einer Stoffaustauschkolonne zur Verfügung zu stellen.

Demgemäß wird eine Vorrichtung zum Einbau einer Packungsscheibe einer strukturierten Packung in einen Behälter einer Stoffaustauschkolonne vorgeschlagen. Die Vorrichtung umfasst eine Trenneinrichtung zum Trennen eines endlosen Packungsbands in einzelne Packungsbleche, eine Zuführeinrichtung zum Zuführen der einzelnen Packungsbleche zu dem Behälter, um die einzelnen Packungsbleche zum Bilden der Packungsscheibe in dem Behälter zu stapeln, und eine Messeinrichtung die dazu eingerichtet ist, einen, vorzugsweise horizontalen, Abstand zweier einander gegenüberliegender Punkte einer Innenkontur des Behälters zu messen, wobei die Trenneinrichtung dazu eingerichtet ist, die einzelnen Packungsbleche so von dem endlosen Packungsband abzutrennen, dass eine jeweilige Länge der Packungsbleche gleich dem gemessenen horizontalen Abstand ist. Hierbei ist eine Mittelachse des Behälters in der Vorrichtung horizontal angeordnet, in anderen Worten gelagert oder aufgenommen.

Vorteil der horizontalen Anordnung der Mittelachse des Behälters ist, dass das Einbringen der Packungsbleche auf einfache Weise über eine, der sich seitlich befindlichen Kolonnenöffnungen erfolgen kann. Zudem erlaubt die horizontale Ausrichtung des Behälters ein Übereinanderstapeln der einzelnen Packungsbleche, ohne dass die bereits eingelegten Packungsbleche während des Einbaus gehalten werden müssten. In der Regel erfolgt nämlich der Einbau der Packungsbleche derart, dass diese in einer zur Mittelachse des Behälters parallelen Ebene liegend angeordnet werden. Zudem kann die Fördereinrichtung für die Packungsbleche einfach ausgestaltet sein, da keine großen Höhendifferenzen zwischen Trenneinrichtung und Behälteröffnung, über welcher der Einbau erfolgt, zu überwinden sind.

Unter einer "horizontalen Anordnung" der Mittelachse im Rahmen der vorliegenden Erfindung ist eine Anordnung zu verstehen, bei der die Mittelachse des Behälters zur Horizontalen eine Neigung von nicht mehr als 15° (Winkelgrad) aufweist, besonders bevorzugt jedoch von nicht mehr als 10°, weiter besonders bevorzugt von nicht mehr als 5°. Eine vorstehend definierte Neigung zur Horizontalen kann sogar von Vorteil für den Einbau der Packungsbleche sein, wenn der Behälter von der Einbauöffnung aus gesehen zu seinem anderen Ende leicht abfällt. Ein Herausrutschen von Packungsblechen aus der Einbauöffnung heraus aus dem Behälter kann damit verhindert werden.

Vorzugsweise weist die erfindungsgemäße Vorrichtung eine Fertigungseinrichtung zum Fertigen des endlosen Packungsbands auf.

Unter einem endlosen Packungsband ist ein Blechband zu verstehen, dessen Länge größer ist, vorzugsweise mehrfach, beispielsweise 20fach, größer ist, als ein Durchmesser des Behälters. Dadurch, dass die Packungsbleche einzeln dem Behälter zugeführt werden und dort zum Bilden der Packungsscheibe gestapelt werden, kann auf die Auftrennung der Packungsscheibe in einzelne Packungspakete verzichtet werden. Hierdurch kann die Packungsscheibe deutlich einfacher montiert werden und Stoßstellen zwischen einzelnen Packungspaketen sind verzichtbar.

Die Innenkontur des Behälters weist vorzugsweise eine kreisrunde Geometrie auf. Alternativ kann die Innenkontur auch eine von einer kreisrunden Geometrie abweichende Kontur, beispielsweise eine ovale Kontur, aufweisen. Die Innenkontur des Behälters ist vorzugsweise definiert durch den Behältermantel. Die Innenkontur des Behälters kann im Rahmen der vorliegenden Erfindung auch definiert sein durch ein Dichtungsmittel, insbesondere einen Dichtungskragen, der zwischen der Packungsscheibe und dem Behältermantel angeordnet ist.

Vorzugsweise umfasst die Vorrichtung ein Fundament, wobei eine Mittelachse des Behälters parallel zu dem Fundament angeordnet ist. Hierbei sind jedoch Abweichungen von nicht mehr als 15° (Winkelgrad), vorzugsweise von nicht mehr als 10°, besonders bevorzugt von nicht mehr als 5° von einer exakt parallelen Anordnung möglich.

Das Fundament kann beispielsweise ein Hallenboden sein. Die Vorrichtung kann transportierbar sein, so dass diese zu einem Aufstellort der Stoffaustauschkolonne transportierbar ist, um dort den Behälter mit strukturierten Packungen zu füllen.

Gemäß einer Ausführungsform weist die Zuführeinrichtung ein höhenverstellbares Förderband auf.

Gemäß einer weiteren Ausführungsform weist die Zuführeinrichtung ein gelenkiges Rollenförderband und eine Hubeinheit auf, die dazu eingerichtet ist, das Rollenförderband anzuheben und abzusenken.

Die Hubeinheit kann beispielsweise ein Scherenhubtisch sein.

Gemäß einer weiteren Ausführungsform umfasst das Rollenförderband eine Packungsblechaufstelleinheit zum Verbringen der einzelnen Packungsbleche von einer horizontalen Anordnung in eine vertikale Anordnung.

Das Rollenförderband umfasst vorzugsweise eine Vielzahl an Rollenblöcken. Insbesondere umfasst auch die Packungsblechaufstelleinheit eine Vielzahl an Rollenblöcken, wobei ein erster Rollenblock und ein letzter Rollenblock der Packungsblechaufstelleinheit senkrecht zueinander angeordnet sind. Das Packungsblech wird in der Packungsblechaufstelleinheit um einen Winkel von 90 verdreht.

Gemäß einer weiteren Ausführungsform weist die Trenneinrichtung eine Vermessungseinheit zum Vermessen der einzelnen Packungsbleche auf.

Mit Hilfe der Vermessungseinheit wird die Länge der einzelnen Packungsbleche in Abhängigkeit von dem von der Messeinrichtung ermittelten Abstand gemessen und die einzelnen Packungsbleche werden mit Hilfe der Trenneinrichtung von dem endlosen Packungsband abgetrennt.

Gemäß einer weiteren Ausführungsform umfasst die Vorrichtung ferner eine in dem Behälter anordenbare höhenverstellbare Arbeitsbühne.

Hierdurch kann ein Monteur, der die Packungsscheibe montiert, die Vorrichtung komfortabel handhaben. Vorzugsweise ist die Arbeitsbühne an einem Träger horizontal verfahrbar befestigt, der an der Hubeinheit der Zuführeinrichtung verschiebbar gelagert ist. Vorzugsweise weist die Arbeitsbühne teleskopierbare Bühnenabschnitte auf.

Teleskopierbar heißt hierbei zusammenfahrbar und auseinanderfahrbar. Hierdurch kann die Arbeitsbühne in vertikaler Richtung in dem Behälter verfahren werden.

Gemäß einer weiteren Ausführungsform umfasst die Vorrichtung ferner einen Richtwinkel zum Ausrichten der einzelnen Packungsbleche relativ zueinander in dem Behälter, wobei vorzugsweise die Messeinrichtung an dem Richtwinkel vorgesehen ist.

Vorzugsweise umfasst der Richtwinkel eine erste Fläche und eine senkrecht zu der ersten Fläche angeordnete zweite Fläche. Mit Hilfe des Richtwinkels können die einzelnen Packungsbleche beim Stapeln zu der Packungsscheibe relativ zueinander ausgerichtet und geglättet werden.

Weiterhin wird ein Verfahren zum Einbau einer Packungsscheibe einer strukturierten Packung in einen Behälter einer Stoffaustauschkolonne vorgeschlagen, wobei eine Mittelachse des Behälters horizontal angeordnet ist bzw. wird.

Das Verfahren weist folgende Schritte auf:
- Bereitstellen eines endlosen Packungsbands;
- Ermitteln eines, insbesondere horizontalen, Abstands zweier einander gegenüberliegender Punkte einer Innenkontur des Behälters;
- Abtrennen einzelner Packungsbleche von dem endlosen Packungsband, wobei die einzelnen Packungsbleche so von dem endlosen Packungsband abgetrennt werden, dass eine Länge eines jeweiligen Packungsblechs dem Abstand entspricht;
- Zuführen der einzelnen Packungsbleche zu dem Behälter;
- Einlegen, vorzugsweise Stapeln, der einzelnen Packungsbleche in den Behälter;
wobei die Schritte wiederholt durchgeführt werden zum Bilden der Packungsscheibe.

Vorzugsweise werden die Packungsbleche in einen Stapel nebeneinander oder aufeinander eingelegt.

Vorzugsweise werden die einzelnen Packungsbleche nacheinander dem Behälter zugeführt. Der vorzugsweise horizontale Abstand zwischen den beiden einander gegenüberliegenden Punkten der Innenkontur des Behälters wird mit Hilfe einer, vorzugsweise vorstehend beschriebenen, Messeinrichtung gemessen. Insbesondere kann mit Hilfe der Messeinrichtung die Länge eines Packungsblechs ermittelt werden, welches nicht unmittelbar auf ein bereits liegendes Packungsblech, sondern auf beispielsweise ein drittes nachfolgendes Packungsblech aufgelegt wird.

Gemäß einer Ausführungsform wird der, vorzugsweise horizontale, Abstand für jedes einzelne Packungsblech gesondert ermittelt.

Der vorzugsweise horizontale Abstand kann beispielsweise eine Sehne der kreisförmigen Innenkontur des Behälters sein.

Wie bereits vorstehend ausgeführt, ist die Mittelachse des Behälters horizontal angeordnet. Hierdurch ergibt sich im Vergleich zu bekannten Anordnungen, bei denen die Mittelachse vertikal angeordnet ist, eine geringe Bauhöhe der Vorrichtung, wodurch das Zuführen der Packungsbleche und der Einbau der Packungsbleche in die Kolonne erheblich vereinfacht ist.

Gemäß einer weiteren Ausführungsform werden mehrere einzelne, d.h. unverbundene, d.h. lose, Packungsbleche gleichzeitig zu dem Behälter zugeführt. Hierunter ist zu verstehen, dass in der Zuführeinrichtung mehrere Packungsbleche gleichzeitig aufgenommen sind, die nacheinander zu dem Behälter zugeführt werden. Es besteht jedoch auch die Möglichkeit, die Packungsbleche einzeln dem Behälter zuzuführen.

Gemäß einer weiteren Ausführungsform wird der, vorzugsweise horizontale, Abstand um einen vorbestimmten Abstand entfernt von einem bereits eingelegten, vorzugsweise mit einer Seite freiliegenden, Packungsblech gemessen, besonders bevorzugt von einem obersten Packungsblech aus.

Vorzugsweise umfasst die Messeinrichtung eine Lasermesseinheit. Mit Hilfe der Lasermesseinheit kann der vorzugsweise horizontale Abstand bestimmt werden.

Gemäß einer weiteren Ausführungsform wird der Behälter nach dem Einbau einer Packungsscheibe und vor dem Einbau einer weiteren Packungsscheibe gedreht.

Hierdurch können die Riffelungen oder Wellungen von Packungsblechen benachbarter Packungsscheiben unterschiedlich orientiert werden.

Weitere mögliche Implementierungen der Vorrichtung und/oder des Verfahrens umfassen auch nicht explizit genannte Kombinationen von zuvor oder im Folgenden bezüglich der Ausführungsbeispiele beschriebenen Merkmale und Ausführungsformen. Dabei wird der Fachmann auch Einzelaspekte als Verbesserungen oder Ergänzungen zu der jeweiligen Grundform der Vorrichtung und/oder des Verfahrens hinzufügen.

Weitere vorteilhafte Ausgestaltungen und Aspekte der Vorrichtung und/oder des Verfahrens sind Gegenstand der Unteransprüche sowie der im Folgenden beschriebenen Ausführungsbeispiele der Vorrichtung und/oder des Verfahrens. Im Weiteren werden die Vorrichtung und/oder das Verfahren anhand von bevorzugten Ausführungsformen unter Bezugnahme auf die beigelegten Figuren näher erläutert.
Fig. 1 zeigt eine schematische Schnittansicht einer Ausführungsform einer Stoffaustauschkolonne;
Fig. 2 zeigt eine schematische perspektivische Ansicht eines Packungsblechs für eine Packung der Stoffaustauschkolonne gemäß Fig. 1;
Fig. 3 zeigt eine schematische perspektivische Ansicht einer Vorrichtung zum Einbau einer Packungsscheibe in einen Behälter für die Stoffaustauschkolonne gemäß Fig. 1;
Fig. 4 zeigt eine schematische Teilansicht der Vorrichtung gemäß Fig. 3;
Fig. 5 zeigt eine schematische perspektivische Teilansicht der Vorrichtung gemäß Fig. 3;
Fig. 6 zeigt eine schematische Seitenansicht eines Rollenblocks für die Vorrichtung gemäß Fig. 3;
Fig. 7 zeigt eine weitere schematische perspektivische Teilansicht der Vorrichtung gemäß Fig. 3;
Fig. 8 zeigt eine weitere schematische perspektivische Teilansicht der Vorrichtung gemäß Fig. 3;
Fig. 9 zeigt eine weitere schematische perspektivische Teilansicht der Vorrichtung gemäß Fig. 3;
Fig. 10 zeigt eine schematische Vorderansicht der Vorrichtung gemäß Fig. 3;
Fig. 11 zeigt eine schematische Seitenansicht einer Ausführungsform einer Messeinrichtung für die Vorrichtung gemäß Fig. 3;
Fig. 12 zeigt eine schematische perspektivische Ansicht der Messeinrichtung gemäß Fig. 11; und
Fig. 13 zeigt ein schematisches Blockdiagramm einer Ausführungsform eines Verfahrens zum Einbau einer Packungsscheibe in einen Behälter für die Stoffaustauschkolonne gemäß Fig. 1.

In den Figuren sind gleiche oder funktionsgleiche Elemente mit denselben Bezugszeichen versehen worden, sofern nichts anderes angegeben ist.

Die Fig. 1 zeigt eine stark vereinfachte schematische Schnittansicht einer Ausführungsform einer Stoffaustauschkolonne 1. Die Stoffaustauschkolonne 1 kann eine Rektifikations- oder Luftzerlegungssäule sein. Unter Rektifikation ist ein thermisches Trennverfahren zu verstehen, das eine Erweiterung der Destillation oder eine Hintereinanderschaltung vieler Destillationsschritte darstellt. Gegenüber der Destillation sind die Vorteile der Rektifikation, dass die Anlage kontinuierlich betrieben werden kann und dass der Trenneffekt im Vergleich zur Destillation um ein Vielfaches höher ist, da der Dampf im Gegenstrom mit der Flüssigkeit mehrfach hintereinander in Kontakt steht. Die Stoffaustauschkolonne 1 arbeitet somit energetisch günstiger, technisch weniger aufwendig und platzsparender als eine Hintereinanderschaltung von Einfachdestillationen.

Die Stoffaustauschkolonne 1 umfasst einen Behälter 2, der eine zylinderförmige Geometrie aufweist. Der Behälter 2 kann beispielsweise aus einem Aluminiumwerkstoff oder einem Stahlwerkstoff gefertigt sein. Vorzugsweise ist der Behälter 2 aus einem Aluminiumwerkstoff gefertigt. Der Behälter 2 ist zylinderförmig um eine Symmetrie- oder Mittelachse M₂ aufgebaut. Der Behälter 2 kann beispielsweise eine Höhe von 30000 bis 50000 Millimeter aufweisen. Der Behälter 2 kann einen kreisrunden oder annähernd kreisrunden, beispielsweise einen ovalen, Querschnitt aufweisen. Der Behälter 2 ist vorzugsweise aus einer Vielzahl Behälterabschnitte oder Mantelabschnitte aufgebaut, die stoffschlüssig miteinander verbunden sind. Die Behälterabschnitte können auch als Behältersektionen, Mantelsektionen oder Mantelschüsse bezeichnet werden. Die Mittelachse M₂ ist in der Orientierung der Fig. 1 vertikal, das heißt, in Schwerkraftrichtung, angeordnet.

In dem Behälter 2 ist eine Vielzahl übereinander gestapelter Packungen 3 angeordnet, von denen in der Fig. 1 jedoch lediglich eine gezeigt ist. Die Packung 3 ist eine sogenannte geordnete oder strukturierte Packung. Bei derartigen Packungen 3 werden, im Gegensatz zu geordneten Packungen, Metallgewebe oder Metallbleche so gefaltet und/oder gewickelt, dass es zu einer intensiven Lenkung des Dampfes und der Flüssigkeit und damit verbundenem intensiven Kontakt beider kommt. Durch eine weitere Strukturierung der Oberfläche und durch die Anbringung von Löchern werden sowohl die Benetzbarkeit der Packungsoberfläche als auch der Stoffaustausch weiter erhöht.

Die Packung 3 kann eine Vielzahl geordneter oder strukturierter Packungsscheiben 4 bis 8 aufweisen, die übereinander angeordnet sind. Die Packungsscheiben 4 bis 8 können auch als Packungslagen oder Packungsschichten bezeichnet werden. Derartige Packungsscheiben 4 bis 8 bestehen aus dünnen, gewellten und/oder gelochten Metallplatten beziehungsweise Drahtnetzen. Das Design der Packungsscheiben 4 bis 8 gewährleistet einen optimalen Austausch zwischen den unterschiedlichen Phasen (flüssig/gasförmig beziehungsweise flüssig/flüssig) bei minimalem Druckwiderstand. Die Anzahl der Packungsscheiben 4 bis 8 pro Packung 3 ist beliebig.

Die Packungsscheiben 4 bis 8 können aus senkrecht angeordneten Packungsblechen, insbesondere aus gewellten Aluminiumblechen, gefertigt sein. Die Packungsscheiben 4 bis 8 bilden aufgrund ihrer Struktur Kondensationsoberflächen, an denen beispielsweise bei der Luftzerlegung Luftbestandteile kondensieren können. Beispielweise können die verwendeten Packungsbleche eine Dicke von 0,1 Millimeter aufweisen. Die Packungsscheiben 4 bis 8 sind nicht segmentiert. Das heißt, die Packungsscheiben 4 bis 8 sind nicht in einzelne Packungspakete unterteilt. Jede Packungsscheibe 4 bis 8 kann beispielsweise eine Dicke von 200 bis 500 Millimeter aufweisen. Die Packung 3 kann so eine Höhe h₃ von beispielsweise 1000 bis 7000 Millimeter aufweisen. Zwischen dem Behälter 2 und der Packung 3 beziehungsweise zwischen dem Behälter 2 und jeder Packungsscheibe 4 bis 8 kann noch ein umlaufender Packungskragen oder Dichtkragen 9 vorgesehen sein. Der Dichtkragen 9 ist optional und somit verzichtbar.

Die Fig. 2 zeigt eine schematische perspektivische Ansicht eines Teils einer Ausführungsform eines Packungsblechs 10, aus einer Vielzahl dessen die Packungsscheiben 4 bis 8 jeweils aufgebaut sind. Wie die Fig. 2 zeigt, weist das Packungsblech 10 eine gewellte Form mit Wellenbergen 11 und Wellentälern 12 auf. Zusätzlich kann das Packungsblech 10 Riffelungen, Lochungen, Bohrung und/oder Durchbrüche aufweisen. Das Packungsblech 10 kann auch netz- oder gitterförmig sein. Das Packungsblech 10 ist vorzugsweise aus einem Aluminiumwerkstoff gebildet und kann, wie bereits zuvor erwähnt, eine Dicke von 0,1 Millimeter aufweisen. Zum Herstellen einer Packungsscheibe 4 bis 8 wird eine Vielzahl derartiger Packungsbleche 10 aufeinandergestapelt. Wie der Fig. 2 weiter zu entnehmen ist, verlaufen die Wellenberge 11 und die Wellentäler 12 in einem Winkel α zu der Mittelachse M₂. Der Winkel α beträgt beispielsweise 45°. Benachbarte Packungsbleche 10 können so angeordnet sein, dass sich die Wellenberge 11 und die Wellentäler 12 kreuzen. Zudem ist aus der Fig. 2 zu ersehen, dass die Packungsbleche 10 so angeordnet werden, dass sie in einer zur Mittelachse M₂ des Behälters 2 parallelen Ebene liegen.

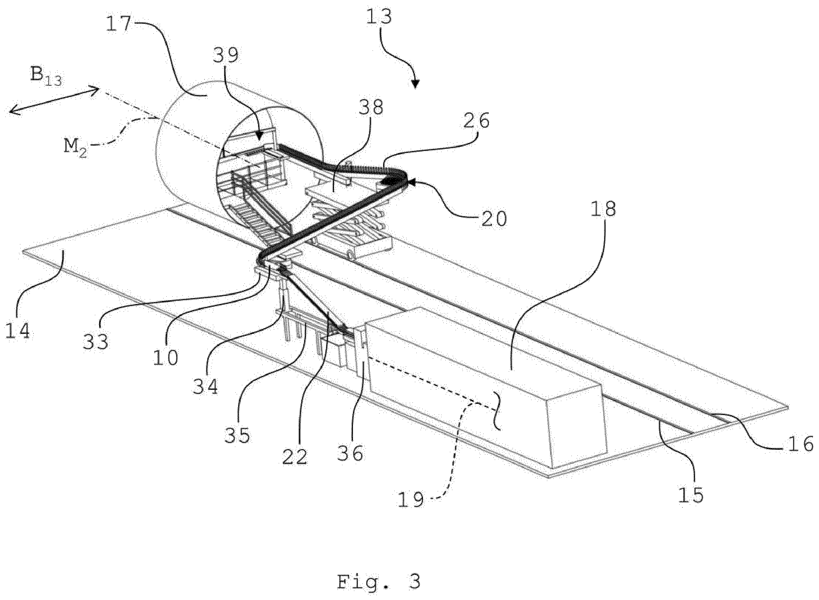

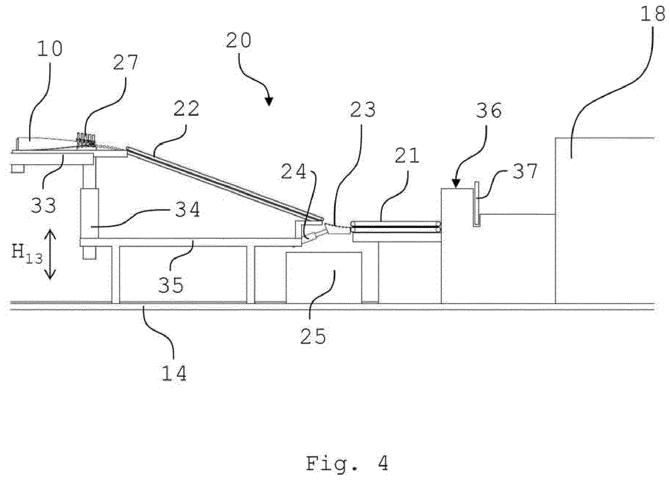

Die Fig. 3 zeigt eine schematische perspektivische Ansicht und die Fig. 4 zeigt eine schematische Teilansicht einer Ausführungsform einer Vorrichtung 13 zum Einbau der Packungsscheiben 4 bis 8 in den Behälter 2. Die Vorrichtung 13 umfasst ein Fundament 14. Das Fundament 14 kann beispielsweise ein Hallenboden sein. An dem Fundament 14 können Führungseinrichtungen 15, 16, beispielsweise Schienen, vorgesehen sein. An den Führungseinrichtungen 15, 16 können verschiebbar Drehvorrichtungen geführt sein, die einen Behälterabschnitt 17 des in der Fig. 1 gezeigten Behälters 2 tragen. Mehrere derartige Behälterabschnitte 17 sind zu einem Behälter 2 verbunden. Alternativ kann die Vorrichtung 13 auch einen komplett fertiggestellten Behälter 2 aufnehmen. Die Mittelachse M₂ ist horizontal, das heißt, parallel zu dem Fundament 14 angeordnet. Unter der horizontalen Anordnung ist zu verstehen, dass eine Abweichung von der Horizontalen von bis zu 15°, vorzugsweise von bis zu 10° und weiter bevorzugt von bis zu 5° mit umfasst ist. Gleiches gilt für eine parallele Anordnung in Relation zum Fundament: hier sind auch Abweichungen von bis zu 15°, vorzugsweise von bis zu 10° und besonders bevorzugt von bis zu 5° mit umfasst. Der Behälterabschnitt 17 kann einen kreisrunden oder annähernd einen kreisrunden Querschnitt aufweisen. Der Querschnitt kann beispielsweise auch oval oder leicht oval sein. Mit Hilfe der nicht gezeigten Drehvorrichtungen, die den Behälterabschnitt 17 tragen, kann der Behälterabschnitt 17 um die Mittelachse M₂ gedreht werden.

Die Vorrichtung 13 umfasst eine Fertigungseinrichtung 18 zum Fertigen eines endlosen Packungsbands 19. Das endlose Packungsband 19 kann in eine Vielzahl Packungsbleche 10 zum Bilden einer Packungsscheibe 4 bis 8 unterteilt werden. Darunter, dass das Packungsband 19 endlos ist, ist zu verstehen, dass eine Länge des Packungsbands 19 deutlich größer als ein Durchmesser des Behälterabschnitts 17 ist, so dass aus dem endlosen Packungsband 19 eine Vielzahl an Packungsblechen 10 gefertigt werden kann. Mit Hilfe der Fertigungseinrichtung 18 kann beispielsweise ein sogenannter Bund oder ein Coil Aluminiumblech geriffelt, gewellt und/oder mit Lochungen versehen werden, um das endlose Packungsband 19 herzustellen.

Die Vorrichtung 13 umfasst weiterhin eine Zuführeinrichtung 20 zum Zuführen der einzelnen Packungsbleche 10 zu dem Behälterabschnitt 17. Die Zuführeinrichtung 20 umfasst ein der Fertigungseinrichtung 18 nachgeordnetes Zwischenförderband 21 und ein dem Zwischenförderband 21 nachgeordnetes Förderband 22. Das Zwischenförderband 21 und das Förderband 22 können als Doppelbänder ausgeführt werden, um eine zuverlässige Förderung der Packungsbleche 10 zu gewährleisten. Die Packungsbleche 10 werden liegend auf dem Zwischenförderband 21 und dem Förderband 22 transportiert. Zwischen dem Zwischenförderband 21 und dem Förderband 22 ist eine Weiche 23 mit einem Antrieb 24 vorgesehen. Der Antrieb 24 kann beispielsweise ein Pneumatik- oder ein Hydraulikzylinder sein. Der Antrieb 24 bewegt die Weiche 23 derart, dass zwischen dem Zwischenförderband 21 und dem Förderband 22 eine Öffnung entstehen kann, über die nicht maßgerechte Packungsbleche 10 ausgeschleust werden können. Ein beispielsweise zu schmales Packungsblech 10 fällt dann aus dem Zwischenförderband 21 in einen Abfallbehälter oder Container 25. Mit Hilfe des Förderbands 22 kann eine Höhendifferenz zwischen der Fertigungseinrichtung 18 und dem Einbauort des jeweiligen Packungsblechs 10 überwunden werden. Hierbei wird die Biegsamkeit des liegenden Packungsblechs 10 ausgenutzt.

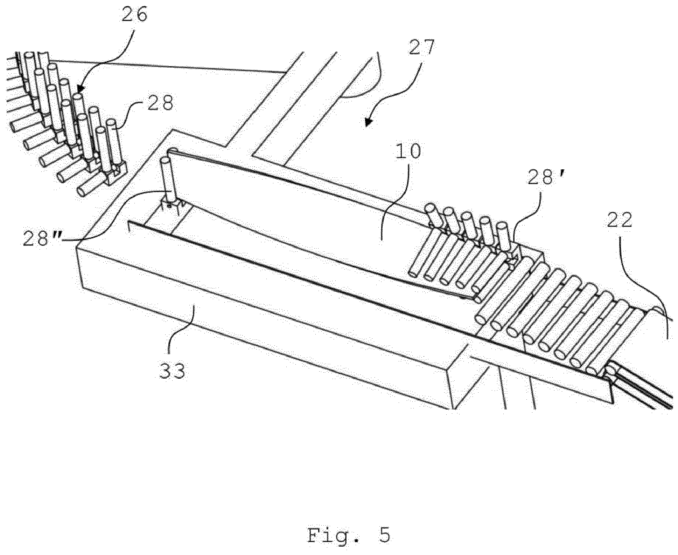

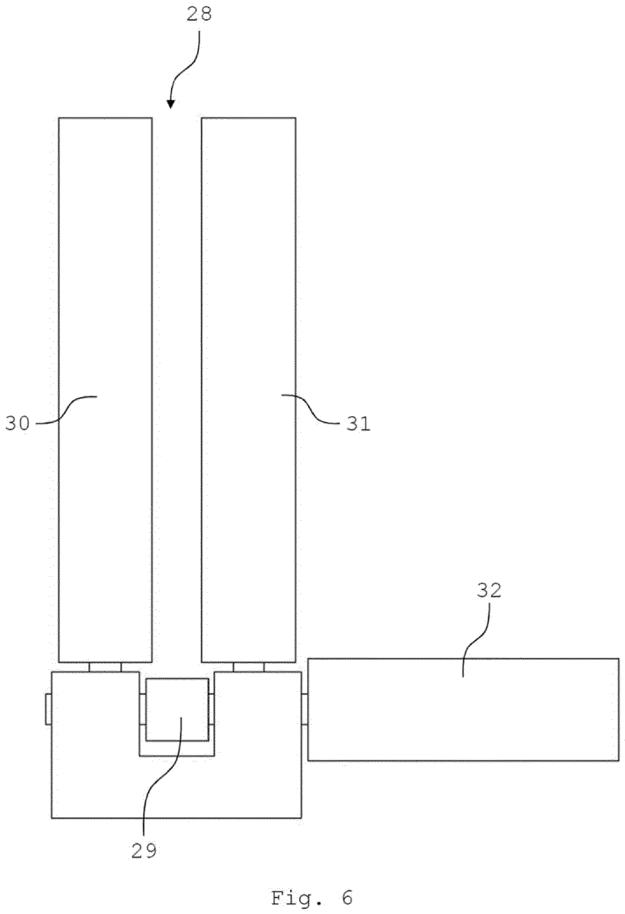

Die Zuführeinrichtung 20 umfasst weiterhin ein Rollenförderband 26, mit dem die Packungsbleche 10 nicht liegend sondern aufrecht transportiert werden. Zwischen dem Förderband 22 und dem Rollenförderband 26 ist eine Packungsblechaufstelleinheit 27 vorgesehen. Die Packungsblechaufstelleinheit 27 ist im Detail in der Fig. 5 gezeigt. Die Packungsblechaufstelleinheit 27 umfasst eine Vielzahl an Rollenblöcken 28. Jeder Rollenblock 28 umfasst, wie in der Fig. 6 gezeigt, eine untere Rolle 29 und zwei Seitenrollen 30, 31. Auf der unteren Rolle 29 liegt eine Schmalseite des jeweiligen Packungsblechs 10 auf. Die untere Rolle 29 ist durch ein Antriebselement 32, insbesondere einen Elektromotor, angetrieben. Alternativ kann die untere Rolle 29 auch durch einen Riemenantrieb angetrieben sein.

Wie in der Fig. 5 gezeigt, sind die Seitenrollen 30, 31 eines ersten Rollenblocks 28' der Packungsblechaufstelleinheit 27 um 90° verdreht zu einem letzten Rollenblock 28" der Packungsblechaufstelleinheit 27 angeordnet. Hierdurch kann das Packungsblech 10 stufenlos von einer liegenden Position in eine aufrechte Position verbracht werden. Hierbei wird das transportierte Packungsblech 10 verwunden. Das Rollenförderband 26 umfasst ebenfalls eine Vielzahl an Rollenblöcken 28, zwischen deren Seitenrollen 30, 31 das hochkant gestellte Packungsblech 10 dem Behälterabschnitt 17 zugeführt wird. Wie in der Fig. 5 gezeigt ist, können zwischen dem ersten Rollenblock 28' der Packungsblechaufstelleinheit 27 und dem letzten Rollenblock 28" derselben eine Vielzahl an Rollenblöcken 28 vorgesehen sein, die entlang des verwundenen Packungsblechs 10 angeordnet sind. Der Einfachheit halber sind nur einige dieser Vielzahl an Rollenblöcken 28 in der Fig. 5 dargestellt.

Die Packungsblechaufstelleinheit 27 ist auf einer Basisplatte 33 montiert. Die Basisplatte 33 ist über ein Hubelement 34, beispielsweise einen Pneumatik- oder Hydraulikzylinder, mit einem Traggerüst 35 verbunden. Das Traggerüst 35 ist auf dem Fundament 14 angeordnet und kann fest mit diesem verbunden sein. Das Förderband 22 ist zwischen der Packungsblechaufstelleinheit 27 und der Weiche 23 angeordnet. Insbesondere ist das Förderband 22 mit der Basisplatte 33 und dem Traggerüst 35 verbunden. Durch eine Höhenverstellung des Hubelements 34 kann die Neigung des Förderbands 22 verändert werden. Eine Höhendifferenz zwischen der Fertigungseinrichtung 18 und dem Behälterabschnitt 17 kann mit Hilfe des Förderbands 22 überwunden werden, wobei die Biegsamkeit des liegenden Packungsblechs 10 ausgenützt wird. Da das Packungsblech 10 in dem Rollenförderband 26 aufrecht transportiert wird, ist bei dem Rollenförderband 26 keine Höhenkorrektur möglich. Mit Hilfe des Hubelements 34 kann die Vorrichtung 13 in einer Höhenrichtung H₁₃ eingestellt werden. Mit Hilfe des Rollenförderbands 26 kann die Vorrichtung 13 in einer Breitenrichtung B₁₃ eingestellt werden, da das Rollenförderband 26 in der Breitenrichtung B₁₃ gelenkig ist.

Die Vorrichtung 13 umfasst weiterhin eine Trenneinrichtung 36, die zwischen dem Zwischenförderband 21 und der Fertigungseinrichtung 18 angeordnet ist. Mit Hilfe der Trenneinrichtung 36 kann das endlose Packungsband 19 in einzelne Packungsbleche 10 aufgetrennt werden. Die Trenneinrichtung 36 umfasst weiterhin eine Vermessungseinheit 37 zum Überprüfen beziehungsweise Messen einer Länge des zuzuschneidenden Packungsblechs 10 vor dem Abtrennen desselben von dem endlosen Packungsband 19. Das Zwischenförderband 21, die Weiche 23 und der Antrieb 24 können der Trenneinrichtung 36 zugeordnet sein.

Das endlose Packungsband 19 wird bei dem Abtrennen von Packungsblechen 10 mit Hilfe der Vermessungseinheit 37 vermessen. Ist das abgeschnittene Packungsblech 10 nicht in der gewünschten Toleranz, wird von der Trenneinrichtung 36 nur ein kurzer Abschnitt des Packungsblechs 10, beispielsweise mit einer Länge von 100 Millimeter, abgelängt. Der Antrieb 24 bewegt dazu die Weiche 23 derart, dass zwischen dem Zwischenförderband 21 und dem Förderband 22 eine Öffnung entsteht, durch die der Abschnitt des Packungsblechs 10 in den Container 25 fällt. Diese Schritte werden so lange durchgeführt, bis das Packungsblech 10 wieder in der gewünschten Toleranz ist.

Ein Abstand zwischen der Vermessungseinheit 37 und der Trenneinrichtung 36 ist abweichend von der Darstellung in der Fig. 4 mindestens so groß wie ein Durchmesser des zu bepackenden Behälterabschnitts 17. Wenn das abgeschnittene Packungsblech 10 in der zulässigen Toleranz liegt, wird das Packungsblech 10 durch die Trenneinrichtung 36 auf die vorgegebene Länge abschnitten und über das Zwischenförderband 21 und die Weiche 23 zum Förderband 22 weitergeleitet. Vor und nach dem Förderband 22 vorgesehene Rollen sind gelenkig gelagert, so dass das Packungsblech 10 horizontal ein- und ausleitbar ist. Nach der Überwindung der Höhendifferenz zwischen der Fertigungseinrichtung 18 und dem Behälterabschnitt 17 wird das Packungsblech 10 in der Packungsblechaufstelleinheit 27 aufgerichtet. Nach der Packungsblechaufstelleinheit 27 ist das Packungsblech 10 senkrecht aufgerichtet und gelangt in das gelenkige Rollenförderband 26. Das Rollenförderband 26 umfasst weiterhin eine Hubeinheit 38, die beispielsweise als Scherenhubtisch ausgebildet ist.

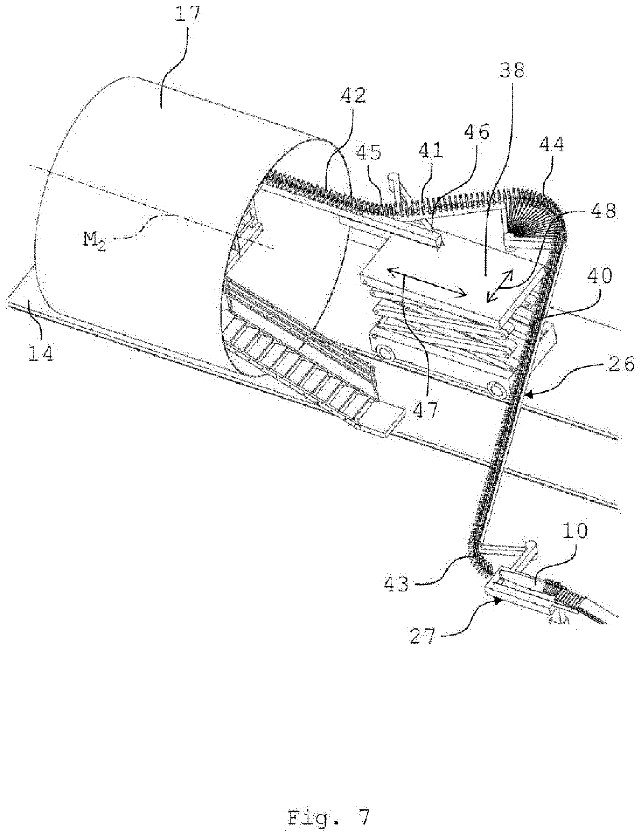

Die Vorrichtung 13 umfasst weiterhin eine in dem Behälterabschnitt 17 angeordnete Messeinrichtung 39, die später noch erläutert wird. Wie in der Fig. 7 gezeigt, wird das Packungsblech 10 in dem Rollenförderband 26 durch mehrere gerade Rollenblockreihen 40 bis 42 und mehrere gebogene Rollenblockreihen 43 bis 45 geführt. Hierbei wird das Packungsblech 10 der im Aufbau befindlichen Packungsscheibe 4 zugeführt. Die Rollenblockreihen 40 bis 45 weisen jeweils eine Vielzahl der zuvor schon erläuterten Rollenblöcke 28 auf. Die gebogenen Rollenblockreihen 43 bis 45 sind mit Gelenken verbunden, so dass die letzte gerade Rollenblockreihe 42 in einer Ebene seitlich und nach vorne und zurück verschoben werden kann. Hierzu ist ein Träger 46 der letzten geraden Rollenblockreihe 42 an der Hubeinheit 38 in Richtung der Mittelachse M₂ und senkrecht zu der Mittelachse M₂ an der Hubeinheit 38 verschiebbar. Die Verschiebbarkeit des Trägers 46 ist in der Fig. 7 mit zwei Doppelpfeilen 47, 48 dargestellt. Träger der Rollenblöcke 28 in den gebogenen Rollenblockreihen 43 bis 45 können mit Federn gegenseitig abgestützt werden, so dass zwischen den einzelnen Rollenblöcken 28 immer der gleiche Winkel liegt.

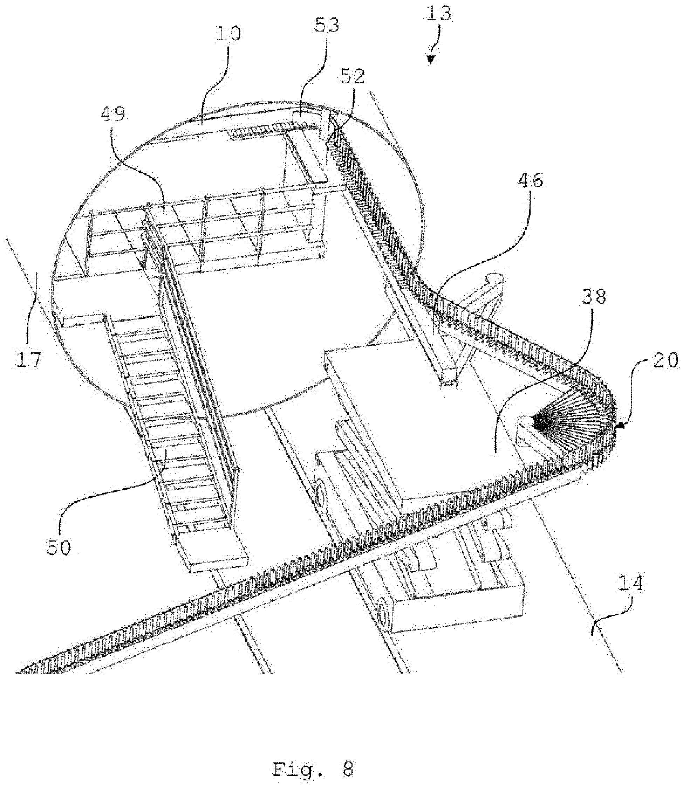

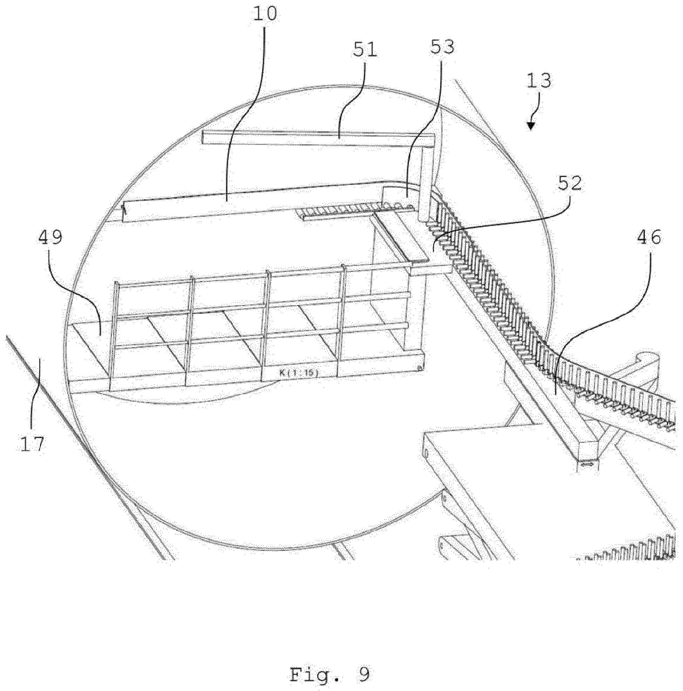

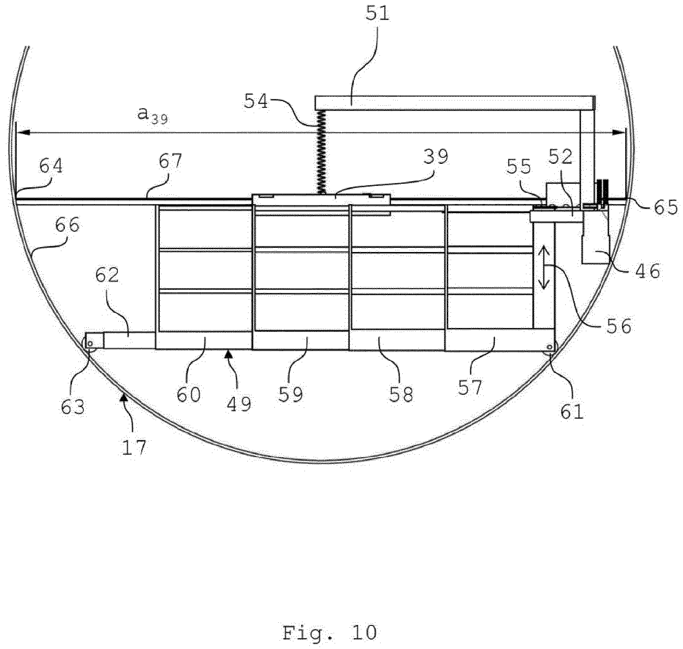

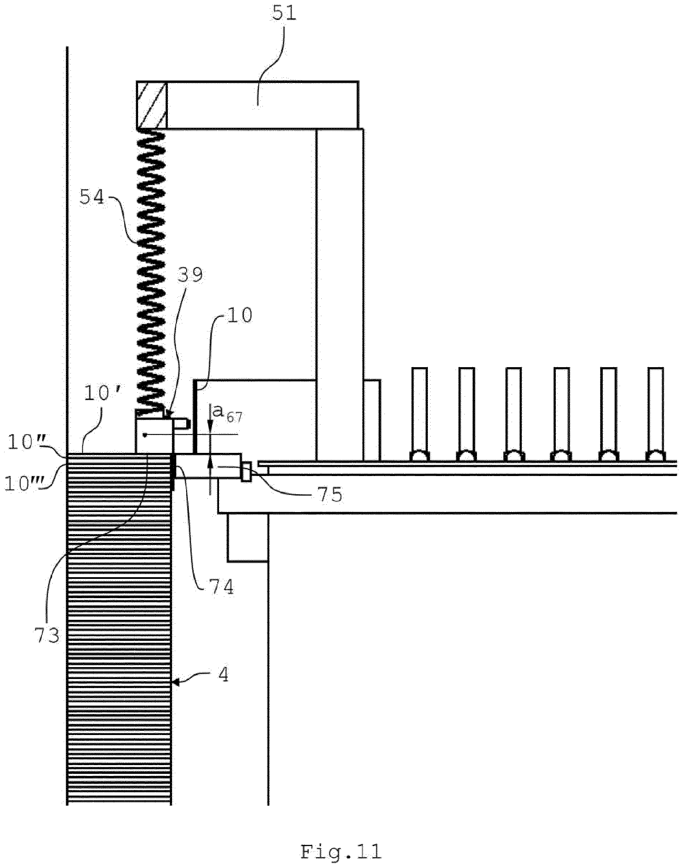

Die Vorrichtung 13 umfasst, wie in den Fig. 8 bis 10 gezeigt, auch eine in dem Behälterabschnitt 17 anordenbare Arbeitsbühne 49 sowie eine Treppe 50, die an der Arbeitsbühne 49 befestigt ist. Die Arbeitsbühne 49 kann an dem Träger 46 montiert sein. An der Arbeitsbühne 49 ist auch ein verstellbarer Galgen 51 vorgesehen, an dem die Messeinrichtung 39 aufgehängt ist. Die Arbeitsbühne 49 ist mit Hilfe einer Basisplatte 52 an dem Träger 46 befestigt. An der Basisplatte 52 ist auch der verstellbare Galgen 51 vorgesehen. Weiterhin ist an der Basisplatte 52 ein Umlenkblech 53 zum Umlenken des Packungsblechs 10 vorgesehen. Die Messeinrichtung 39 ist, wie in den Fig. 10 und 11 gezeigt, mit Hilfe eines Federelements 54 an dem Galgen 51 befestigt. An dem Träger 46 ist eine mit einem Endanschlag 55 an der Basisplatte 52 vorgesehene Gleitführung vorgesehen. Mit Hilfe der Gleitführung ist die Arbeitsbühne 49 an dem Träger 46 in vertikaler Richtung bis zu dem Endanschlag 55 verschiebbar geführt. Die vertikale Verlagerbarkeit der Arbeitsbühne 49 ist in der Fig. 10 mit Hilfe eines Doppelpfeils 56 dargestellt.

Die Arbeitsbühne 49 umfasst einen festen Bühnenabschnitt 57, der an der Basisplatte 52 geführt ist, und mehrere weitere Bühnenabschnitte 58 bis 60. Die Bühnenabschnitte 57 bis 60 sind teleskopierbar. An dem ersten Bühnenabschnitt 57 ist eine Rolle 61 vorgesehen, die dazu eingerichtet ist, innenseitig auf dem Behälterabschnitt 17 abzurollen. Die Arbeitsbühne 49 umfasst weiterhin einen Einstiegsabschnitt 62, an dem die Treppe 50 befestigt sein kann. Der Einstiegsabschnitt 62 umfasst ebenfalls eine Rolle 63, die innenseitig auf dem Behälterabschnitt 17 abrollen kann.

Die Messeinrichtung 39 ist dazu eingerichtet, einen Abstand a₃₉ zwischen einem ersten Punkt 64 und einem zweiten Punkt 65 einer Innenkontur 66 des Behälterabschnitts 17 zu messen. Die Innenkontur 66 des Behälterabschnitts 17 kann ein Kreis sein. Der Abstand a₃₉ zwischen dem ersten Punkt 64 und dem zweiten Punkt 65 kann eine Sehne der kreisförmigen Innenkontur 66 sein. Die Innenkontur 66 kann auch oval sein.

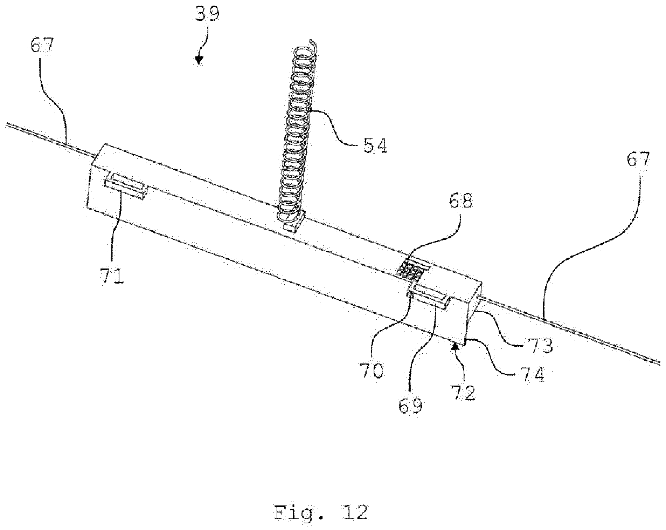

Die Messeinrichtung 39 kann eine Lasermesseinheit aufweisen, die dazu eingerichtet ist, mit Hilfe eines Laserstrahls 67 den Abstand a₃₉ zu messen. Die Messeinrichtung 39 umfasst, wie in der Fig. 12 gezeigt, ein Bedienfeld 68 zum Bedienen der Messeinrichtung 39. Beispielsweise kann über das Bedienfeld 68 die Länge eines Packungsblechs 10 manuell eingestellt werden. Der Laserstrahl 67 ist weiterhin, wie in der Fig. 12 gezeigt, mittels eines an einem Handgriff 69 vorgesehenen Betätigungsknopfes 70 aktivier- und deaktivierbar. Die Messeinrichtung 39 kann noch einen weiteren Handgriff 71 aufweisen. Weiterhin umfasst die Messeinrichtung 39 einen Richtwinkel 72 mit einer ersten Fläche 73 und einer senkrecht zu der ersten Fläche 73 angeordneten zweiten Fläche 74. An der Arbeitsbühne 49 sind, wie in der Fig. 11 gezeigt, noch weitere nicht angetriebene Rollen 75 vorgesehen, auf denen das Packungsblech 10 geführt ist.

Wie die Fig. 11 zeigt, ist eine Packungsscheibe 4 aus einer Vielzahl übereinandergestapelter Packungsbleche 10', 10", 10"' gebildet, wobei in der Fig. 11 lediglich drei Packungsbleche 10', 10", 10'" mit einem Bezugszeichen versehen sind. Zum Bilden der Packungsscheibe 4 in dem Behälterabschnitt 17 wird ein zugeschnittenes Packungsblech 10 mit Hilfe der Zuführeinrichtung 20 zu der Arbeitsbühne 49 hin zugeführt. Das noch aufrecht stehende Packungsblech 10 wird von Hand um das Umlenkblech 53 auf die nicht angetriebenen Rollen 75 geleitet, so dass das Packungsblech 10 vor den bereits montierten Packungsblechen 10', 10", 10'" zum Liegen kommt. Das zugeführte Packungsblech 10 wird nun entweder nach vorne oder nach hinten auf das bereits montierte Packungsblech 10' umgekippt und mit Hilfe des Richtwinkels 72 ausgerichtet. Durch ein Andrücken der Flächen 73, 74 des Richtwinkels 72 wird das oberste Packungsblech 10 an die bereits vorhandenen Packungsbleche 10', 10", 10'" angedrückt und gleichzeitig eingeebnet. Dabei hält der Monteur die Messeinrichtung 39 an den Handgriffen 69, 71.

Nach dem Einrichten des Packungsblechs 10 drückt der Monteur den Betätigungsknopf 70, und mit Hilfe der Messeinrichtung 39 wird der Abstand a₃₉ ermittelt. Da der Laserstrahl 67 in einem Abstand a₆₇ von dem obersten Packungsblech 10' beabstandet angeordnet ist, wird mit Hilfe der Messeinrichtung 39 die Länge eines Packungsblechs 10 ermittelt, das nach einer bestimmten Anzahl an Lagen, beispielsweise nach drei oder vier Lagen Packungsblechen 10 benötigt wird. Der von der Messeinrichtung 39 ermittelte Abstand a₃₉ wird der Trenneinrichtung 36, insbesondere einer nicht dargestellten Steuerung der Trenneinrichtung 36, mit einer ebenfalls in den Figuren nicht dargestellten Datenübertragungseinrichtung übermittelt. Der Abstand a₆₇ des Laserstrahls 67 über der letzten Packungslage geteilt durch die Dicke der Packungsbleche 10 ergibt die Anzahl der Packungsbleche 10, die vor dem gemessenen Packungsblech 10 noch montiert werden müssen. Hierdurch können Packungsbleche 10, die in der Fördereinrichtung 20 bereits unterwegs sind, berücksichtigt werden.

Nach dem Messvorgang lässt der Monteur den Richtwinkel 72 los, und das Federelement 54 an dem beweglichen Galgen 51 zieht die Messeinrichtung 39 nach oben weg, so dass ein neues Packungsblech 10 montiert werden kann. Mit jedem neuen Packungsblech 10 wird das Rollenförderband 26 mit Hilfe der Hubeinheit 38 um die Dicke eines Packungsblechs 10 angehoben. Weiterhin kann noch die horizontale Lage des Trägers 46 angepasst werden.

Dadurch, dass die Arbeitsbühne 49 vertikal geführt ist, kann diese zusammen mit der Messeinrichtung 39 angehoben werden. Für die unterste Packungsblechlage in dem Behälterabschnitt 17 wird der Träger 46 der geraden Rollenblockreihe 42 etwas zur Mitte und nach unten bewegt. Die Arbeitsbühne 49 schiebt sich dabei zusammen. Das Zusammenschieben kann manuell, durch Federbelastung oder durch elektrische, pneumatische oder hydraulische Antriebe erfolgen. Im oberen Bereich des Behälterabschnitts liegt die Rolle 61 des ersten Bühnenabschnitts 57 nicht mehr am Behälterabschnitt 17 an, sondern wird durch den Träger 46 über den Endanschlag 55 gehalten.

Bei einem Verfahren zum Einbau einer Packungsscheibe 4 bis 8 der Packung 3 in den Behälter 2 wird in einem Schritt S1 das endlose Packungsband 19 bereitgestellt. Hierzu kann das endlose Packungsband 19 mit Hilfe der Fertigungseinrichtung 18 aus einem Aluminiumcoil gefertigt werden. In der Fertigungseinrichtung 18 kann das Aluminiumcoil beispielsweise mit Lochungen oder Wellungen versehen werden. In einem Schritt S2 wird der, vorzugweise horizontale, Abstand a₃₉ zwischen zwei einander gegenüberliegenden Punkten 64, 65 der Innenkontur 66 des Behälters 2 beziehungsweise des Behälterabschnitts 17 ermittelt. Anhand des ermittelten Abstands a₃₉ wird in einem Schritt S3 das endlose Packungsband 19 in einzelne Packungsbleche 10, 10', 10", 10"' getrennt werden, wobei eine Länge eines jeweiligen einzelnen Packungsblechs 10, 10', 10", 10'" dem ermittelten, vorzugsweise horizontalen, Abstand a₃₉ entspricht. Die einzelnen Packungsbleche 10, 10', 10", 10'" werden nacheinander dem Behälterabschnitt 17 zugeführt. Dies erfolgt in einem Schritt S4. Die einzelnen Packungsbleche 10 werden in einem Schritt S5 in dem Behälterabschnitt 17 zum Bilden der Packungsscheibe 4 eingelegt, in der Regel gestapelt. In dieser Art und Weise können mehrere Packungsscheiben 4 bis 8 nacheinander in dem Behälterabschnitt 17 aufgebaut werden, wobei der Behälterabschnitt 17 nach jeder fertig montierten Packungsscheibe 4 bis 8 um einen definierten Winkel weitergedreht wird.

Obwohl die vorliegende Erfindung vollständig anhand von Ausführungsbeispielen beschrieben wurde, ist sie innerhalb des Schutzumfangs der Ansprüche vielfältig modifizierbar.

### Verwendete Bezuaszeichen

- 1: Stoffaustauschkolonne
- 2: Behälter
- 3: Packung
- 4: Packungsscheibe
- 5: Packungsscheibe
- 6: Packungsscheibe
- 7: Packungsscheibe
- 8: Packungsscheibe
- 9: Dichtkragen
- 10: Packungsblech
- 10': Packungsblech
- 10": Packungsblech
- 10"': Packungsblech
- 11: Wellenberg
- 12: Wellental
- 13: Vorrichtung
- 14: Fundament
- 15: Führungseinrichtung
- 16: Führungseinrichtung
- 17: Behälterabschnitt
- 18: Fertigungseinrichtung
- 19: Packungsband
- 20: Zuführeinrichtung
- 21: Zwischenförderband
- 22: Förderband
- 23: Weiche
- 24: Antrieb
- 25: Container
- 26: Rollenförderband
- 27: Packungsblechaufstelleinheit
- 28: Rollenblock
- 28': Rollenblock
- 28": Rollenblock
- 29: Rolle
- 30: Seitenrolle
- 31: Seitenrolle
- 32: Antriebselement
- 33: Basisplatte
- 34: Hubelement
- 35: Traggerüst
- 36: Trenneinrichtung
- 37: Vermessungseinheit
- 38: Hubeinheit
- 39: Messeinrichtung
- 40: Rollenblockreihe
- 41: Rollenblockreihe
- 42: Rollenblockreihe
- 43: Rollenblockreihe
- 44: Rollenblockreihe
- 45: Rollenblockreihe
- 46: Träger
- 47: Doppelpfeil
- 48: Doppelpfeil
- 49: Arbeitsbühne
- 50: Treppe
- 51: Galgen
- 52: Basisplatte
- 53: Umlenkblech
- 54: Federelement
- 55: Endanschlag
- 56: Doppelpfeil
- 57: Bühnenabschnitt
- 58: Bühnenabschnitt
- 59: Bühnenabschnitt
- 60: Bühnenabschnitt
- 61: Rolle
- 62: Einstiegsabschnitt
- 63: Rolle
- 64: Punkt
- 65: Punkt
- 66: Innenkontur
- 67: Laserstrahl
- 68: Bedienfeld
- 69: Handgriff
- 70: Betätigungsknopf
- 71: Handgriff
- 72: Richtwinkel
- 73: Fläche
- 74: Fläche
- 75: Rolle

- a₃₉: Abstand
- a₆₇: Abstand
- B₁₃: Breitenrichtung
- h₃: Höhe
- H₁₃: Höhenrichtung
- M₂: Mittelachse
- S1: Schritt
- S2: Schritt
- S3: Schritt
- S4: Schritt
- S5: Schritt
- α: Winkel

## Patentansprüche

1. Vorrichtung (13) zum Einbau einer Packungsscheibe (4 - 8) einer strukturierten Packung (3) in einen Behälter (2) einer Stoffaustauschkolonne (1), mit einer Trenneinrichtung (36) zum Trennen eines endlosen Packungsbands (19) in einzelne Packungsbleche (10, 10', 10", 10"'), **gekennzeichnet durch** eine Zuführeinrichtung (20) zum Zuführen der einzelnen Packungsbleche (10, 10', 10", 10'") zu dem Behälter (2), um die einzelnen Packungsbleche (10, 10', 10", 10'") zum Bilden der Packungsscheibe (4 - 8) in dem Behälter (2) zu stapeln, und einer Messeinrichtung (39), die dazu eingerichtet ist, einen, insbesondere horizontalen, Abstand (a₃₉) zweier einander gegenüberliegender Punkte (64, 65) einer Innenkontur (66) des Behälters (2) zu messen, wobei die Trenneinrichtung (36) dazu eingerichtet ist, die einzelnen Packungsbleche (10, 10', 10", 10'") so von dem endlosen Packungsband (19) abzutrennen, dass eine jeweilige Länge der Packungsbleche (10, 10', 10", 10'") gleich dem gemessenen Abstand (a₃₉) ist, und wobei eine Mittelachse (M₂) des Behälters (2) in der Vorrichtung (13) horizontal angeordnet ist.

2. Vorrichtung nach Anspruch 1, ferner umfassend eine Fertigungseinrichtung (18) zum Fertigen des endlosen Packungsbands (19).

3. Vorrichtung nach Anspruch 1 oder 2, wobei die Zuführeinrichtung (20) ein gelenkiges Rollenförderband (26) und eine Hubeinheit (38) aufweist, die dazu eingerichtet ist, das Rollenförderband (26) anzuheben und abzusenken.

4. Vorrichtung nach Anspruch 3, wobei das Rollenförderband (26) eine Packungsblechaufstelleinheit (27) aufweist zum Verbringen der einzelnen Packungsbleche (10, 10', 10", 10'") von einer horizontalen Anordnung in eine vertikale Anordnung.

5. Vorrichtung nach einem der Ansprüche 1 bis 4, wobei die Trenneinrichtung (36) eine Vermessungseinheit (37) zum Vermessen der einzelnen Packungsbleche (10, 10', 10", 10'") aufweist.

6. Vorrichtung nach einem der Ansprüche 1 bis 5, ferner umfassend eine in dem Behälter (2) angeordnete höhenverstellbare Arbeitsbühne (49).

7. Vorrichtung nach Anspruch 6, wobei die Arbeitsbühne (49) teleskopierbare Bühnenabschnitte (57 - 60) aufweist.

8. Vorrichtung nach einem der Ansprüche 1 bis 6, ferner umfassend einen Richtwinkel (72) zum Ausrichten der einzelnen Packungsbleche (10, 10', 10", 10"') relativ zueinander in dem Behälter (2), wobei insbesondere die Messeinrichtung (39) an dem Richtwinkel (72) vorgesehen ist.

9. Vorrichtung nach einem der Ansprüche 1 bis 8, wobei die Zuführeinrichtung (20) ein höhenverstellbares Förderband (22) aufweist.

10. Verfahren zum Einbau einer Packungsscheibe (4 - 8) einer strukturierten Packung (3) in einen Behälter (2) einer Stoffaustauschkolonne (1 aufweisend folgende Schritte:
- Bereitstellen (S1) eines endlosen Packungsbands (19);
- Abtrennen (S3) einzelner Packungsbleche (10, 10', 10", 10'") von dem endlosen Packungsband (19)
**gekennzeichnet, durch**
- Ermitteln (S2) eines, insbesondere horizontalen, Abstands (a₃₉) zweier einander gegenüberliegender Punkte (64, 65) einer Innenkontur (66) des Behälters (2);
- wobei beim Abtrennen (S3) einzelner Packungsbleche (10, 10', 10", 10'") von dem endlosen Packungsband (19), die einzelnen Packungsbleche (10, 10', 10", 10'") so von dem endlosen Packungsband (19) abgetrennt werden, dass eine Länge eines jeweiligen Packungsblechs (10, 10', 10", 10'") dem Abstand (a39) entspricht;
- Zuführen (S4) der einzelnen Packungsbleche (10, 10', 10", 10'") zu dem Behälter (2);
- Einlegen (S5) der einzelnen Packungsbleche (10, 10', 10", 10'") in den Behälter (2);
wobei die Schritte wiederholt durchgeführt werden zum Bilden der Packungsscheibe (4 - 8) und wobei eine Mittelachse (M2) des Behälters (2) horizontal angeordnet wird,

11. Verfahren nach Anspruch 10, wobei die einzelnen Packungsbleche (10, 10', 10", 10"') in einen Stapel nebeneinander oder aufeinander eingelegt werden.

12. Verfahren nach Anspruch 10 oder 11, wobei der Abstand (a₃₉) für jedes Packungsblech (10, 10', 10", 10'") gesondert ermittelt wird.

13. Verfahren nach einem der Ansprüche 10 bis 12, wobei mehrere der einzelnen Packungsbleche (10, 10', 10", 10'") gleichzeitig dem Behälter (2) zugeführt werden.

14. Verfahren nach einem der Ansprüche 10 bis 13, wobei der Abstand (a₃₉) um einen vorbestimmten Abstand (a₆₇) entfernt von einem bereits eingelegten, insbesondere mit einer Seite freiliegenden, Packungsblech (10') gemessen wird.

15. Verfahren nach einem der Ansprüche 10 - 14, wobei der Behälter (2) nach dem Einbau einer Packungsscheibe (4 - 8) und vor dem Einbau einer weiteren Packungsscheibe (4 - 8) gedreht wird.

## Claims

1. Apparatus (13) for installing a packing plate (4-8) of a structured packing (3) in a container (2) of a mass transfer column (1), with a separating device (36) for separating an endless packing belt (19) into individual packing sheets (10, 10', 10", 10"'), **characterized by** a feeding device (20) for feeding the individual packing sheets (10, 10', 10", 10'") to the container (2) in order to stack the individual packing sheets (10, 10', 10", 10'") in the container (2) to form the packing plate (4-8), and a measuring device (39), which is configured to measure a distance (a₃₉), in particular a horizontal distance, between two points (64, 65), lying opposite one another, of an inner contour (66) of the container (2), wherein the separating device (36) is configured to separate the individual packing sheets (10, 10', 10", 10'") from the endless packing belt (19) in such a manner that a respective length of the packing sheets (10, 10', 10", 10"') is equal to the measured distance (a₃₉), and wherein a central axis (M₂) of the container (2) is arranged horizontally in the apparatus (13).

2. Apparatus according to claim 1, further comprising a manufacturing device (18) for manufacturing the endless packaging belt (19).

3. Apparatus according to claim 1 or 2, wherein the feeding device (20) has an articulated roller conveyor belt (26) and a lifting unit (38), which is configured to raise and lower the roller conveyor belt (26).

4. Apparatus according to claim 3, wherein the roller conveyor belt (26) has a packing plate positioning unit (27) for moving the individual packing sheets (10, 10', 10", 10'") from a horizontal arrangement to a vertical arrangement.

5. Apparatus according to one of the claims 1 to 4, wherein the separating device (36) has a measuring unit (37) for measuring the individual packing sheets (10, 10', 10", 10'").

6. Apparatus according to one of the claims 1 to 5, further comprising a height-adjustable working platform (49) arranged in the container (2).

7. Apparatus according to claim 6, wherein the working platform (49) has telescopic platform sections (57-60).

8. Apparatus according to one of the claims 1 to 6, further comprising an alignment bracket (72) for aligning the individual packing sheets (10, 10', 10", 10"') relative to each other in the container (2), wherein, in particular, the measuring device (39) is provided on the alignment bracket (72).

9. Apparatus according to one of the claims 1 to 8, wherein the feeding device (20) has a height-adjustable conveyor belt (22).

10. Process for installing a packing plate (4-8) of a structured packing (3) in a container (2) of a mass transfer column (1) having the following steps:
- Providing (S1) an endless packing belt (19);
- Separating (S3) individual packing sheets (10, 10', 10", 10'") from the endless packing belt (19)
**characterized by**
- Determining (S2) a distance (a₃₉), in particular a horizontal distance, between two points (64, 65), lying opposite one another, of an inner contour (66) of the container (2);
- wherein, upon the separation (S3) of individual packing sheets (10, 10', 10", 10'") from the endless packing belt (19), the individual packing sheets (10, 10', 10", 10'") are separated from the endless packing belt (19) in such a manner that a length of a respective packing plate (10, 10', 10", 10'") corresponds to the distance (a₃₉);
- Feeding (S4) the individual packing sheets (10, 10', 10", 10'") to the container (2);
- Placing (S5) the individual packing sheets (10, 10', 10", 10"') into the container (2);
wherein the steps are carried out repeatedly in order to form the packing plate (4-8) and wherein a central axis (M2) of the container (2) is arranged horizontally,

11. Process according to claim 10, wherein the individual packing sheets (10, 10', 10", 10'") are placed in a stack next to or on top of each other.

12. Process according to claim 10 or 11, wherein the distance (a₃₉) is determined separately for each packing sheet (10, 10', 10", 10"').

13. Process according to one of the claims 10 to 12, wherein several of the individual packing sheets (10, 10', 10", 10'") are simultaneously fed to the container (2).

14. Process according to one of the claims 10 to 13, wherein the distance (a₃₉) is measured by a predetermined distance (a₆₇) away from an already placed packing sheet (10'), in particular with one side that is exposed.

15. Process according to one of the claims 10-14, wherein the container (2) is rotated after the installation of a packing plate (4-8) and before the installation of an additional packing plate (4-8).

## Revendications

1. Appareil (13) pour l'installation d'une rondelle de garniture (4 - 8) d'un garnissage structuré (3) dans un récipient (2) d'une colonne d'échange de matière (1), doté d'un dispositif de séparation (36) pour séparer une bande de garnissage sans fin (19) en feuilles de garnissage individuelles (10, 10', 10", 10"'), **caractérisé par** un dispositif d'alimentation (20) pour acheminer les feuilles de garnissage individuelles (10, 10', 10", 10"') vers le récipient (2), en vue d'empiler les feuilles de garnissage individuelles (10, 10', 10", 10'") dans le récipient (2) pour former la rondelle de garniture (4 - 8) et d'un dispositif de mesure (39) conçu pour mesurer une distance (a₃₉), en particulier horizontale, entre deux points diamétralement opposés (64, 65) d'un contour intérieur (66) du récipient (2), le dispositif de séparation (36) étant conçu pour séparer les feuilles de garnissage individuelles (10, 10', 10", 10"') de la bande de garnissage sans fin (19) de telle façon qu'une longueur respective des feuilles de garnissage (10, 10', 10", 10"') soit égale à la distance mesurée (a₃₉) et un axe central (M₂) du récipient (2) étant disposé horizontalement dans l'appareil (13).

2. Appareil selon la revendication 1, comprenant en outre un dispositif de fabrication (18) pour fabriquer la bande de garnissage sans fin (19).

3. Appareil selon la revendication 1 ou 2, dans lequel le dispositif d'alimentation (20) comprend une bande transporteuse à rouleaux souple (26) et une unité de levage (38) conçue pour soulever et abaisser la bande transporteuse à rouleaux (26).

4. Appareil selon la revendication 3, dans lequel la bande transporteuse à rouleaux (26) comprend une unité d'installation de feuilles de garnissage (27) pour déplacer les feuilles de garnissage individuelles (10, 10', 10", 10'") d'une disposition horizontale à une disposition verticale.

5. Appareil selon l'une quelconque des revendications 1 à 4, dans lequel le dispositif de séparation (36) comprend une unité de jaugeage (37) pour jauger les feuilles de garnissage individuelles (10, 10', 10", 10'").

6. Appareil selon l'une quelconque des revendications 1 à 5, comprenant en outre une plateforme élévatrice (49) réglable en hauteur disposée dans le récipient (2).

7. Appareil selon la revendication 6, dans lequel la plateforme élévatrice (49) comprend des sections de plateforme télescopiques (57 - 60).

8. Appareil selon l'une quelconque des revendications 1 à 6, comprenant en outre un coin de redressage (72) pour aligner les feuilles de garnissage individuelles (10, 10', 10", 10'") les unes par rapport aux autres dans le récipient (2), le dispositif de mesure (39) étant en particulier prévu au niveau du coin de redressage (72).

9. Appareil selon l'une quelconque des revendications 1 à 8, dans lequel le dispositif d'alimentation (20) comprend une bande transporteuse réglable en hauteur (22).

10. Procédé pour l'installation d'une rondelle de garniture (4 - 8) d'un garnissage structuré (3) dans un récipient (2) d'une colonne d'échange de matière (1), comprenant les étapes suivantes :
- fourniture (S1) d'une bande de garnissage sans fin (19) ;
- séparation (S3) de feuilles de garnissage individuelles (10, 10', 10", 10'") de la bande de garnissage sans fin (19)
**caractérisé par**
- la détermination (S2) d'une distance (a₃₉), en particulier horizontale, entre deux points diamétralement opposés (64, 65) d'un contour intérieur (66) du récipient (2) ;
- lors de la séparation (S3) des feuilles de garnissage individuelles (10, 10', 10", 10"') de la bande de garnissage sans fin (19), les feuilles de garnissage individuelles (10, 10', 10", 10"') étant séparées de la bande de garnissage sans fin (19) de telle sorte qu'une longueur d'une feuille de garnissage respective (10, 10', 10", 10'") corresponde à la distance (a₃₉) ;
- l'acheminement (S4) des feuilles de garnissage individuelles (10, 10', 10", 10"') vers le récipient (2) ;
- l'insertion (S5) des feuilles de garnissage individuelles (10, 10', 10", 10'") dans le récipient (2) ;
les étapes étant répétées pour former la rondelle de garniture (4 - 8) et un axe central (M2) du récipient (2) étant disposé horizontalement,

11. Procédé selon la revendication 10, dans lequel les feuilles de garnissage individuelles (10, 10', 10", 10"') sont placées en pile les unes à côté des autres ou les unes sur les autres.

12. Procédé selon la revendication 10 ou 11, dans lequel la distance (a₃₉) est déterminée séparément pour chaque feuille de garnissage (10, 10', 10", 10"').

13. Procédé selon l'une quelconque des revendications 10 à 12, dans lequel plusieurs feuilles de garnissage individuelles (10, 10', 10", 10"') sont acheminées simultanément dans le récipient (2).

14. Procédé selon l'une quelconque des revendications 10 à 13, dans lequel la distance (a₃₉) est mesurée à une distance prédéterminée (a₆₇) d'une feuille de garnissage (10') déjà insérée, dotée en particulier d'un côté exposé.

15. Procédé selon l'une quelconque des revendications 10-14, dans lequel le récipient (2) est tourné après l'insertion d'une rondelle de garniture (4 - 8) et avant l'insertion d'une autre rondelle de garniture (4 - 8).
